# EUROPÄISCHE PATENTANMELDUNG

(11) **EP 1 302 268 A1**
(43) Veröffentlichungstag der Anmeldung: **16.04.2003**
(21) Anmeldenummer: 02021010.0
(22) Anmeldetag: 20.09.2002
(51) Int. Cl.: B23K 1/005, F24J 2/00

(54) **Verfahren zum Verbinden von Metallteilen durch Löten**

(30) Priorität: 21.09.2001 DE 10146652
(71) Anmelder: Firma Ikarus Solar AG, 87437 Kempten (DE)
(72) Erfinder: Füssel, Uwe, 09114 Chemnitz (DE); Zschetzsche, Jörg, 01277-Dresden (DE); Frenz, Christoph, 01187-Dresden (DE)
(74) Vertreter: Pfister, Stefan Helmut Ulrich

(57) **Zusammenfassung**

Die Erfindung betrifft ein Verfahren zum Verbinden zweier Metallteile durch eine Lötung, wobei das Lot durch eine IR-Strahlungsquelle als Hitzequelle direkt oder indirekt verflüssigt wird.

## Beschreibung

Die Erfindung betrifft ein Verfahren zum Verbinden von Metallteilen durch eine Lötung.

Für das Verbinden von Metallteilen sind unterschiedliche Verfahren bisher bekannt. Für die unterschiedlichsten Verbindungsaufgaben werden dabei auch unterschiedliche Verfahren eingesetzt. So sind zum Beispiel Schweißen, Ultraschallschweißen, Hart- und Weichlöten von besonderer Bedeutung. Im Absorberbau, insbesondere bei der Herstellung von Solarkollektoren, ist es notwendig, sehr dünne Platten oder Folien eines Materials mit sehr guten Wärmeleiteigenschaften mit Rohren des gleichen Materials beziehungsweise eines anderen Materials mit ebenfalls sehr gutem Wärmeleitwert zu verbinden. Vorzugsweise wird dabei Kupfer als Material eingesetzt. Bei der Herstellung der Solarkollektoren ist es dabei notwendig, derartige Rohre beziehungsweise Rohrschlangen auf bis zu 2,0 m² großen Flächen mit einem Abstand von ca. 10 cm bis 15 cm zueinander anzubringen. Bisher ist es bekannt, derartige Lotverbindungen mittels Ultraschall herzustellen.

Das Ultraschallöten bringt mehrere Nachteile mit sich. Ein Nachteil sind sehr lange Produktionszeiten, bedingt dadurch, daß das Ultraschallötgerät jedes Rohr einzeln abfährt. Ein weiterer Nachteil ist der schlechte Wärmeübergang, da das Lot wegen der andauernden mechanischen Belastung durch den Ultraschall beim Abkühlen einen nicht so guten Wärmeübergang ergibt, wie zum Beispiel ein Flammenlöten. Jedoch ist es gerade bei Solarkollektoren wichtig, einen guten Wärmeübergang zwischen Absorberplatte und Rohr zu bilden, um einen hohen Wirkungsgrad zu erreichen.

Andere Lötverfahren, zum Beispiel das Flammenlöten, haben den Nachteil, daß die meist sehr dünnen Absorberplatten (übliche Absorberplattendicke für eine solarthermische Anlage beträgt ca. 0,2 mm bis 0,4 mm) sich aufgrund der hohen Wärmeeinwirkung stark verziehen. Weiterhin werden Beschichtungen des Absorberblechs, die bereits vor dem Lötprozeß auf dem Blech aufgebracht sind, aufgrund des Lötprozesses zerstört. Damit wird das Erscheinungsbild aber auch die Effizienz eines Absorbers erheblich beeinträchtigt. Außerdem sind Nachbehandlungen hinsichtlich der Beschichtung und des Verziehens beispielsweise durch Wärmenachbehandlung notwendig.

Im Stand der Technik sind auch verschiedene Lötverfahren wie zum Beispiel das Weichlöten bekannt, wobei für den genannten Einsatzzweck das Ofenlöten zu langsam ist und das Flammenlöten zu einer heißen Lötstelle führt. Weitere bekannte Lötverfahren sind Hartlöten oder Schweißlöten. Durch den bereits erwähnten, sehr filigranen Aufbau von Solarkollektoren, kommt es auch bei den zuvor erwähnten Lötverfahren zu negativen Erscheinungen des Verziehens und der Beschädigung der auf den Blechen beziehungsweise der Folie aufgebrachten Beschichtung.

Das Ofenlöten ist dabei aufgrund der Größe der Reflektoren von ca. 2 m² auch mit einem sehr hohen apparatetechnischen Aufwand verbunden. Die auf den Metallfolien beziehungsweise Platten aufgebrachten Beschichtungen sind im Wesentlichen schwarz und dienen dazu, die Sonnenstrahlung optimal einzufangen. Die Beschichtung wird in unterschiedlichen, dazu bekannten Verfahren auf die Metallfolie beziehungsweise Platte aufgebracht. Beispielsweise ist es bekannt, dünne Kohlenstoffschichten auf Kupferfolien aufzubringen. Verfahrenstechnisch ist es dabei von Vorteil, wenn die Beschichtung, wie bereits erwähnt, vor dem Aufbringen der Rohre des Kollektors beziehungsweise Absorbers erfolgen kann.

Es ist auch ein Verfahren zur Herstellung eines Absorbers für insbesondere Solarkollektoren bekannt, bei dem ein oder mehrere Bleche mit einem oder mehreren Rohrgeflechten parallel verbunden werden. Die Bleche und Rohrgeflechte werden dabei mit einer Welle aus bewegtem flüssigen Lotmittel in Kontakt gebracht, von dieser benetzt und dadurch verbunden, wobei das oder die Rohrgeflechte das oder die Bleche berühren, und wobei der Bereich aus bewegtem flüssigen Lotmittel und die Bleche mit Rohrgeflechten relativ zueinander bewegt werden. Dieses Verfahren ist insbesondere sehr aufwendig, da während des Lötvorganges die Bereiche aus bewegtem flüssigen Lotmittel und die Bleche mit Rohrgeflechten relativ zueinander bewegt werden müssen. Des weiteren ist das Lotmittel innerhalb eines speziellen Behältnisses durch Beheizung ständig flüssig zu halten. Im weiteren wird eine ständige Wärmezufuhr auch für die Erwärmung der zu verlötenden Materialien, respektive der Bleche und Rohrgeflechte, notwendig sein, um eine ausreichend stabile Lotverbindung erhalten zu können. Geschieht dies nicht, ist mit Fehllötungen beziehungsweise sogenannten kalten Lötstellen zu rechnen.

Es sind weiterhin Vorrichtungen zum berührungslosen, selektiven Ein- und Auslöten von elektronischen Bauelementen bekannt, welche mit einer Halogen-Infrarot-Strahlungsquelle arbeiten. Derartige Lösungen sind insbesondere im elektronischen Bauelementebau im Einsatz, wo Bauelemente wie Halbleiter beziehungsweise Chips auf einer Leiterplatine aufgebracht werden müssen. Derartige Bauelemente haben mindestens zwei bis hin zu sehr vielen einzelnen Anschlußpunkten, welche durch eine Lötverbindung dann auf der Leiterplatine aufgebracht werden müssen. Derartige Verfahren beziehungsweise Vorrichtungen eignen sich nicht zum Aufbringen von größeren Bauelementen, wie sie beispielsweise im Solarkollektorenbau untereinander verbunden werden müssen.

Die bekannten Vorrichtungen zum Löten von elektronischen Bauelementen sind dabei insbesondere als handbedienbare Lötvorrichtungen bekannt. Das Hauptanwendungsgebiet derartiger Vorrichtungen liegt im selektiven, zerstörungsfreien und kontaktlosen Aus- oder Einlöten moderner vielpoliger elektronischer Bauelemente in dicht bestückten Platinen sowie in der Nachbearbeitung von Platinen aus Lötanlagen hohen Automatisierungsgrades. Beispielsweise dienen derartige Vorrichtungen auch zur Behebung fehlerhafter Lötstellen aus automatisch bestückten Platinen sowie in der manuellen Lötung spezieller Bauelemente in der Fertigung. Sie finden außerdem noch dort Einsatz, wo Kolbenlötungen aufgrund physikalischer Effekte negative Einflüsse auf die Fügepartner haben.

Ein weiteres Verfahren zum Löten oberflächenmontierbarer Bauelemente wird ebenfalls bei der Herstellung von elektronischen Schaltungen eingesetzt. Dieses Verfahren dient insbesondere dazu, Überhitzungen von derartigen Bauelementen, welche auf Platinen aufgelötet werden sollen, aufgrund ihrer unterschiedlichen Materialstrukturen zu vermeiden. Die der Wärmestrahlung besonders stark ausgesetzten Oberflächenteile von derartigen Bauelementen werden dabei mit einer reflektierenden Folie abgedeckt. Auch diese Lösung stellt kein Verfahren zur Verfügung, mit dem großflächige beziehungsweise größerflächige Verbindungen durch Löten herzustellen sind, wie es beispielsweise im Solarkollektorenbau notwendig ist.

Die Erfindung hat es sich inbesondere zur Aufgabe gemacht, ein kostengünstiges Verfahren zum Verbinden von mindestens zwei, gegebenenfalls auch großflächigen Metallteilen, wie sie zum Beispiel für den Bau von Solarkollektoren benötigt werden, zur Verfügung zu stellen.

Erfindungsgemäß wird diese Aufgabe dadurch gelöst, daß ein Verfahren zum Verbinden mindestens zweier Metallteile durch eine Lötung zur Verfügung gestellt wird, bei dem das Lot durch eine Hitze- beziehungsweise Wärmequelle direkt oder indirekt verflüssigt wird und die mindestens beiden Metallteile nach dem Abkühlen verbindet, welches sich dadurch auszeichnet, daß großflächige Metallteile, insbesondere Metallteile wie Platten, Rohre, Folien, Profile und dergleichen und eine Infrarot (IR)-Strahlungsquelle als Hitze- beziehungsweise Wärmequelle verwendet wird.

Erfindungsgemäß wird dabei vorgeschlagen, daß die Infrarot-Strahlungsquelle das Lot direkt oder indirekt verflüssigt. Bei einer direkten Verflüssigung wirkt die Strahlungsquelle unmittelbar auf das Lot, bei einer indirekten Verfahrensweise wird das Lot von einem Metallteil, welches der Infrarot-Strahlungsquelle ausgesetzt ist, mittelbar geheizt. Dabei erhitzt sich auch das Metallteil entsprechend und leitet durch Diffusion die Wärme weiter. Der Vorteil des erfindungsgemäßen Vorschlages liegt darin, daß die Energiedepotsierung ortgenau eingeprägt werden und so eine Lötverbindung sehr genau durchgeführt werden kann, ohne dabei großflächig die Metallteile zu erhitzen.

Gleichzeitig ist das erfindungsgemäße Verfahren gerade dazu geeignet, Metallreile, Platten, Rohre, Folien und dergleichen unter Verwendung einer Infrarotstrahlungsquelle zu verbinden. Mittels einer solchen Lösung war es nach dem Stand der Technik bisher lediglich möglich, elektronische Bauelemente auf Platinen zu befestigen beziehungsweise für den Austausch zu lösen und neue Elemente dann einzulöten. Dabei sind im Verhältnis sehr kleine Flächen punktartig miteinander zu verbinden. Das erfindungsgemäße Verfahren stellt eine Lösung zur Verfügung, die das Verbinden von größeren bzw. großflächigen Metallteilen, wie Platten, Rohren, Folien und Profilen und dergleichen, mit Hilfe der Löttechnik unter Verwendung einer Infrarot-Strahlungsquelle jetzt effektiv ermöglicht. Der erfindungsgemäße Vorschlag eignet sich inbesondere für die Massenfertigung oder eine Fließbandfertigung zur Produktion entsprechender Solarkollektoren oder anderer verbundener Metallteile. Die Infrarotstrahlungsquelle erwärmt dabei gegebenenfalls selektiv nur den Lötbereich, wobei dessen abgestrahlte Energie genau so eingestellt werden kann, daß keine Beschädigungen der zu verbindenden Metallteile auftreten, wohingegen beim Flammlöten entsprechende Beschädigungen der sehr dünnen Materialien unvermeidbar waren. Die Erfindung ist problemlos auch an sehr großflächige Bauteile anzupassen, an die räumliche Beschränkung eines Heizofens beim Ofenlöten ist der erfindungsgemäße Vorschlag nicht gebunden.

Dabei erfolgt bei dem erfindungsgemäßen Vorschlag auch keine mechanische Beanspruchung des Lots, woraus auch ein besserer Wärmeübergang der Lötverbindung entsteht. Des weiteren eignet sich der erfindungsgemäße Vorschlag auch zur Realisierung einer hohen Produktionsgeschwindigkeit, da mit verhältnismäßig geringem Aufwand entsprechend größere Infrarot-Strahlungsquellen aufgebaut werden können. Von der Lötverbindung wird insbesondere bei der Herstellung von Solarkollektoren gefordert, daß eine ausreichende, mechanische Stabilität besteht und gleichzeitig ein guter Wärmeübergang von der Platte auf das Rohr beziehungsweise die darin geführte Flüssigkeit existiert.

Der erfindungsgemäße Vorschlag erreicht dieses Ziel und stellt gleichzeitig ein wirtschaftliches, auch in der Serie einsetzbares Verfahren zur Verfügung. Dabei ist das erfindungsgemäße Verfahren nicht allein auf den Einsatz bei dem Bau von Solarkollektoren beschränkt, sondern kann bei beliebig ausgestalteten Metallteilen, die zu verbinden sind, eingesetzt werden.

Als Infrarot-Strahlungsquellen sind die unterschiedlichsten dazu bekannten Strahlungsquellen einzusetzen. Es ist auch möglich, den bereits längere Zeit bekannten Nernst-Brenner beziehungsweise die Nernst-Lampen einzusetzen.

Gemäß einer Weiterbildung des erfindungsgemäßen Verfahrens ist vorgesehen, daß mindestens ein Metallteil der zu verbindenen Metallteile mit einer die Infrarot-Strahlung absorbierenden Beschichtung ausgestattet ist und so das Metallteil indirekt erwärmt wird. Die Infrarot-Strahlungsquelle wirkt dabei zunächst auf die Beschichtung und erwärmt diese. Die auf dem Metallteil aufgebrachte Beschichtung erwärmt dann das Metallteil und so mittelbar, indirekt das Lot, so daß dieses verflüssigt ist und die Lötverbindung herstellt.

Durch den erfindungsgemäßen Vorschlag wird erreicht, daß zum Beispiel auch Metallteile, die aus Kupfer bestehen, in zügiger Weise bearbeitet werden können. Bei Kupfer beträgt der Reflektionskoeffizient im IR-Spektralbereich zwischen 80 % bis 95 %. Das bedeutet, daß die Infrarot-Strahlung mit einer Wellenlänge von 2.000 bis 10.000 Nanometer unter Umständen stark reflektiert wird und nicht wie gewünscht in kurzer Zeit das Material erwärmt. Dies könnte nur durch höhere Leistung und damit auch höheren Energieverbrauch erreicht werden.

Insbesondere bei Kupfer wäre daher ein wirtschaftliches Aufwärmen der Kupferplatten, trotz der guten Steuerungsmöglichkeit der Strahlungsintensität der Infrarot-Strahlungsquelle, nur mit geringer Effizienz denkbar. Durch das Anbringen mindestens einer Absorberbeschichtung auf mindestens einem Metallteil der zu verbindenden Metallteile ist ein effektives Erwärmen beziehungsweise Aufwärmen der Metallteile besser gegeben und die Fügezeit kann deutlich reduziert werden. Hierbei wird der Effekt ausgenutzt, daß die die Infrarot-Strahlung gut absorbierende Beschichtung indirekt das Metallteil erhitzt.

Die Beschichtung kann beispielsweise durch eine Kohlenstoffschicht gegeben sein.

Gemäß einer Weiterbildung des erfindungsgemäßen Verfahrens ist es vorgesehen, daß die Lötstelle auf der der Beschichtung abgewandten Seite mindestens eines Metallteiles liegt. Durch diese erfindungsgemäße Ausgestaltung können auch nicht unmittelbar zugängliche Lötstellen zuverlässig verlötet werden.

Die Beschichtung kann allerdings auch neben der Lötstelle angeordnet sein.

Entsprechend einer Weiterbildung der Erfindung ist es vorgesehen, daß das Lot ein die Infrarot-Strahlung absorbierendes Mittel oder einen Bestandteil aufweist, der die Infrarot-Strahlung derart absorbiert, daß das Lot die mindestens zwei Metallteile miteinander verbindet. Damit wird es beispielsweise möglich, auch unbeschichtete Metallteile miteinander zu verbinden.

Ein weiterer Aspekt der Erfindung ist dadurch gekennzeichnet, daß zwischen dem Metallteil und der Infrarot-Strahlungquelle Masken angeordnet werden, die die bestrahlte Fläche auf ein solches Maß begrenzen, welches für die Lötverbindung unbedingt notwendig ist.

Das erfindungsgemäße Verfahren ist dabei nicht nur zur Verbindung von Metallplatten und Rohren, wie sie beispielsweise für Solarkollektoren verbunden werden, geeignet. Es ist vielmeher möglich, unterschiedlichste Metallteile miteinander zu verbinden. Dies können beispielsweise Platten, Rohre, Folien, Profile und dergleichen sein.

Die Metallteile können dabei aus solchen Metallen wie Kupfer, Eisen, Blei, Messing und so weiter bestehen. Das erfindungsgemäße Verfahren ist dabei auf alle bekannten Metalle beziehungsweise Legierungen, die lötbar sind, anwendbar.

Entsprechend einer Weiterbildung des erfindungsgemäßen Verfahrens ist es vorgesehen, daß die Beschichtung vor der Lötverbindung auf das Metallteil aufgebracht wird. Dies kann beispielsweise durch Aufdampfen, Aufsputtern oder andere, geeignete Beschichtungsverfahren (zum Beispiel Schweißen, Kleben und so weiter) geschehen.

Es wurde auch gefunden, daß es von Vorteil ist, wenn das Lot als Lötpaste ausgebildet ist und zumindest ein Metallteil zunächst mit der Lötpaste bestrichen wird, bevor die Metallteile zueinander ausgerichtet werden. Dabei ist es selbstverständlich, daß lediglich die zu verbindenden Flächen mit der Lötpaste eingestrichen werden.

Dazu ist es weiterhin auch möglich, Schablonen auf einem der Metallteile auszulegen und dann die Lötpaste aufzubringen. Dadurch wird eine genauere Begrenzung der späteren Lötverbindung gewährleistet.

Das Aufbringen der Lötpaste kann wahlweise auch mittels mechanischer oder automatischer Einrichtungen, wie Pressen oder Spritzen, aufgebracht werden.

Entsprechend einer Weiterbildung des erfindungsgemäßen Verfahrens ist es vorgesehen, daß auf mindestens einem der zu verbindenden Metallteile eine Kohlenstoffbeschichtung vorgesehen ist.

Die Aufgabe der Erfindung wird auch durch ein Verfahren zur Herstellung von Solarkollektoren gelöst, bei welchen als erstes Metallteil eine Metallplatte oder -folie und als zweites Metallteil ein Rohr vorgesehen ist, wobei die beiden Metallteile zueinander ausgerichtet werden und dann mit einem Verfahren nach einem oder mehreren der bereits vorher beschriebenen Verfahren verbunden werden. Mittels eines derartigen Verfahrens lassen sich insbesondere Solarkollektoren auf eine vorteilhafte Weise und insbesondere mit einem wesentlich geringeren Aufwand als bisher üblich herstellen. Gleichzeitig werden durch das erfindungsgemäße Herstellungsverfahren von Solarkollektoren, welches auf den Einsatz des ebenfalls erfindungsgemäßen, neuartigen Verbindungsverfahrens aufbaut, produktionstechnisch günstige Lötverbindungen vorgesehen, die einen guten Wärmeübergang, welcher für Solarkollektoren wichtig ist, bilden.

Ein weiterer Aspekt des zuvor beschriebenen Verfahrens besteht darin, daß zur Herstellung von Solarkollektoren Bündel von Rohren beziehungsweise Rohrgeflechte oder Rohrschlangen und mindestens eine Metallplatte beziehungsweise -folie nach dem Ausrichten zueinander mit einem der Verfahren, wie zuvor beschrieben, miteinander verbunden werden. Dies ermöglicht, den Herstellungsprozeß von Solarkollektoren oder dergleichen weiter zu optimieren. Insbesondere ist vorgesehen, daß das (vorgefertigte) Rohrgeflecht in einem Bearbeitungsschritt, gleichwohl als großes erstes Metallteil, zum Beispiel mit einer Platte/Folie und dergleichen, als zweites Metallteil verbunden wird.

Eine Weiterbildung des zuvor beschriebenen Verfahrens sieht vor, daß die Abkühlwärme eines ersten, bereits gefertigten Solarkollektors zum Anwärmen beziehungsweise Aufwärmen eines nachfolgenden Solarkollektors verwendet wird. Der bereits gefertigte Solarkollektor wird dabei beispielsweise als Unterlage für den nachfolgenden zu fertigenden Solarkollektor verwendet.

Die Erfindung wird nachfolgend anhand eines Ausführungsbeispieles weiter beschrieben. Zur Herstellung eines Solarkollektors werden die Kupferrohre beziehungsweise Rohrschlangen mit einem Durchmesser von 12 mm bis 18 mm und einem Abstand der einzelnen Rohre zueinander zwischen 10 cm bis 15 cm auf einer eben ausgebildeten Unterlage angeordnet. Auf dem zur Verbindung vorgesehenen Teil der Rohrschlangen wird eine Lötpaste aufgebracht. Die Lötpaste ist dabei so bemessen, daß eine Lötverbindung nach dem Erwärmen entstehen kann. Nachfolgend wird eine Kupferplatte beziehungsweise -folie mit einer Stärke von 0,2 mm bis 0,4 mm auf den so angeordneten Rohrschlangen beziehungsweise Rohrharfen angeordnet. Die Kupferplatte ist dabei beispielsweise mit einer Kohlenstoffschicht beschichtet, die bereits in einer Vorfertigungsanlage beim Kupferfolien- beziehungsweise -plattenhersteller aufgebracht wurde. Dieses Aufbringen kann beispielsweise durch Sputtern erfolgt sein. Die beschichtete Seite ist dabei auf der von der vorgesehenen Lötverbindung abgewandten Seite anzuordnen. Die Kupferplatte beziehungsweise -folie hat eine Fläche von bis zu ca. 2 m² pro Sonnenkollektor.

Auf die beschichtete Oberfläche wird eine Maske aufgelegt, die der Form der Rohrschlange beziehungsweise -harfe entspricht. Über der Kupferplatte werden dann Infrarot-Strahlungsquellen in definiertem Abstand und mit einer definierten Wellenlänge, die zwischen 2.000 bis 10.000 Nanometern liegt, angeordnet. Durch die Wahl des Wellenlängenfensters und die Bestrahlzeit wird die zu depotsierende Energiemenge pro Fläche eingestellt. Die Kupferplatte wird dabei so lange bestrahlt, bis das Lot der Lötpaste schmilzt und bis sich die gewünschte Lötstellenbreite ausgebildet hat. Nachdem die Lötpaste geschmolzen ist, können die Strahlungsquellen abgeschaltet beziehungsweise aus dem Bereich des Solarkollektors geschwenkt werden. Nachdem aus dem Bereich des jetzt verbundenen Solarkollektors die Strahlungsquelle entfernt wurde, kann beispielsweise die Abkühlwärme des so gefertigten Solarkollektors zum Anwärmen beziehungsweise Aufwärmen des nächsten zu verbindenden Solarkollektors beziehungsweise der Teile dieses Solarkollektors verwendet werden. Bei dem so beschriebenen Verfahren ist die Strahlungsquelle der Seite der Kupferplatte zugewandt, die eine Beschichtung trägt. Durch das Aufheizen der Beschichtung wird indirekt die Kupferplatte erwärmt und dadurch insbesondere das sich auf der der Beschichtungsseite abgewandten Seite befindende Lot zum Schmelzen gebracht.

Das Verfahren kann selbstverständlich auch derart ausgeführt werden, daß zunächst eine Kupferplatte beziehungsweise eine Folie auf einer ebenen Fläche ausgelegt wird. Dann werden, entsprechend der Ausbildung der Rohrschlangen bzw. -harfen, angefertigte Schablonen auf diese Kupferplatte gelegt. Anschließend erfolgt das Einstreichen der freien Flächen mittels einer Lötpaste. Die Lötpaste kann beispielsweise solche Bestandteile besitzen, die Infrarot-Strahlen absorbierende Eigenschaften aufweisen. Nachdem die Masken von der Kupferfolie entfernt sind, kann dann die Rohrschlange bzw. -harfe auf die Kupferplatte gelegt werden. Die Bestrahlung der Lötstellen kann dann beispielsweise in einem solchen Winkel beidseitig erfolgen, daß das Lot in sehr kurzer Zeit schmilzt und damit ein sehr effektives Verbindungsverfahren bei der Herstellung von Solarkollektoren zur Verfügung gestellt ist. Selbstverständlich kann das Verfahren auch derart ausgeführt werden, daß beispielsweise die Rohre eine Beschichtung aufweisen, die die Infrarot-Strahlen absorbieren und damit die Wärme an die zu verbindenden Stellen abgeben. Dabei ist es selbstverständlich, daß die zur Verbindung vorgesehenen Stellen in solchen Fällen keine Beschichtung aufweisen, wenn die Art der Beschichtung eine Lötverbindung nicht zuläßt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren zum Verbinden von mindestens zwei Metallteilen durch eine Lötung, wobei das Lot durch eine Hitzequelle direkt oder indirekt verflüssigt wird und die Metallteile an der Lötstelle verbindet, **dadurch gekennzeichnet, daß** großflächige Metallteile, insbesondere Metallteile wie Platten, Rohre, Folien, Profile und dergleichen und als Hitzequelle eine Infrarot (IR) Strahlungsquelle verwendet werden.

2. Verfahren nach Anspruch 1, **dadurch gekennzeichnet, daß** ein Metallteil mit einer die Infrarot-Strahlung absorbierenden Beschichtung ausgestattet ist und so das Metallteil beziehungsweise das Lot indirekt erwärmt wird.

3. Verfahren nach einem oder beiden der vorhergehenden Ansprüche, **dadurch gekennzeichnet, daß** die Infrarot-Strahlungsquelle durch einen Nernst-Brenner beziehungsweise eine Nernst-Lampe zur Verfügung gestellt ist.

4. Verfahren nach einem oder mehreren der vorhergehenden Ansprüche, **dadurch gekennzeichnet, daß** die Lötstelle auf der der Beschichtung abgewandten Seite des Metallteiles liegt und/oder die Lötstelle neben der Beschichtung angeordnet ist.

5. Verfahren nach einem oder mehreren der vorhergehenden Ansprüche, **dadurch gekennzeichnet, daß** das Lot ein die Infrarotstrahlung absorbierendes Mittel oder Bestandteil aufweist.

6. Verfahren nach einem oder mehreren der vorhergehenden Ansprüche, **dadurch gekennzeichnet, daß** zwischen dem Metallteil und der Infrarot-Strahlungsquelle Masken angeordnet werden und so die bestrahlte Fläche begrenzt wird.

7. Verfahren nach einem oder mehreren der vorhergehenden Ansprüche, **dadurch gekennzeichnet, daß** die Metallteile aus Kupfer, Messing, Eisen, Blei, Metallegierungen und so weiter bestehen.

8. Verfahren nach einem oder mehreren der vorhergehenden Ansprüche, **dadurch gekennzeichnet, daß** die Beschichtung vor der Lötverbindung auf das Metallteil aufgedampft, aufgesputtert oder aufgebracht wird und/oder auf dem Metallteil eine Kohlenstoffbeschichtung vorgesehen ist.

9. Verfahren nach einem oder mehreren der vorhergehenden Ansprüche, **dadurch gekennzeichnet, daß** das Lot als Lötpaste ausgebildet ist und zumindest ein Metallteil zunächst mit der Lötpaste bestrichen wird, bevor die Metallteile zueinander ausgerichtet werden.

10. Verfahren nach einem oder mehreren der vorhergehenden Ansprüche, **dadurch gekennzeichnet, daß** auf das Metallteil, auf welches die Lötpaste aufgebracht werden soll, vor dem Aufbringen der Lötpaste Schablonen ausgelegt werden, die der Fläche der Lötverbindung entsprechen und/oder das Aufbringen der Lötpaste mittels einer Spritz- beziehungsweise Dosiereinrichtung erfolgt.

11. Verfahren zur Herstellung von Solarkollektoren, bei welchen als erstes Metallteil eine Metallplatte oder -folie und als zweites Metallteil ein Rohr vorgesehen ist, welche, nachdem die Metallteile zueinander ausgerichtet sind, mit einem Verfahren nach einem oder mehreren der vorhergehenden Ansprüche verbunden werden.

12. Verfahren nach Anspruch 11, **dadurch gekennzeichnet, daß** ein Bündel von Rohren beziehungsweise Rohrgeflechten und mindestens eine Metallplatte bzw. -folie nach dem Ausrichten zueinander, gegebenenfalls in einem Verarbeitungsschritt, verbunden werden.

13. Verfahren nach einem oder beiden der vorhergehenden Ansprüche 11 und 12, **dadurch gekennzeichnet, daß** die Abkühlwärme eines ersten gefertigten Solarkollektors zum Anwärmen beziehungsweise Aufwärmen eines nachfolgenden Solarkollektors verwendet wird.
